# EUROPEAN PATENT APPLICATION

(11) **EP 3 696 624 A1**
(43) Date of publication of application: **19.08.2020**
(21) Application number: 20157263.3
(22) Date of filing: 13.02.2020
(51) Int. Cl.: G05B 15/02

(54) **INTELLIGENT CONTROL SYSTEM AND METHOD**

(30) Priority: 14.02.2019 CN 201910114128
(71) Applicant: Carrier Corporation, Palm Beach Gardens, FL 33418 (US)
(72) Inventor: SHA, Danqing, Pudong New Area, Shanghai 201204 (CN); JIA, Zhen, Pudong New Area, Shanghai 201204 (CN); ZHU, Zhengang, Pudong New Area, Shanghai 201204 (CN); ZHOU, Guichun, Pudong New Area, Shanghai 201204 (CN); WAGNER, Timothy C., East Hartford, CT Connecticut 06108 (US); BIRNKRANT, Michael J., East Hartford, CT Connecticut 06108 (US)
(74) Representative: Dehns

(57) **Abstract**

The present invention provides an intelligent control system and method. The intelligent control system includes: a sensor assembly, including a plurality of sensors arranged in the building and configured to capture real-time data in the building; a data processing module, connected to the plurality of sensors to process the real-time data to obtain processed data; and a decision-making module, connected to the data processing module to receive the processed data and determine a counter measure, wherein the sensor assembly is further configured to capture response data in the building to the executed counter measure and feedback the response data to the decision-making module, and the decision-making module is further configured to train the real-time decision model based on the response data. The processed data and the corresponding response data are further stored in a data storage module as historical data, which is used for establishing and/or training the real-time decision model and a predictive decision-making model.

## Description

The present invention relates to the field of building control, and more specifically to an intelligent control system for a building and an intelligent control method for a building.

Intelligent building control, especially counter measures for emergency situations such as fire, gunshot, earthquake, and biochemical attack, is critical to the operation of buildings. Existing counter measures, including broadcast, static indication or alarm, are mainly controlled or executed by human and cannot reflect the actual situation in time and evacuate occupants efficiently.

According to a first aspect, an intelligent control system for a building is provided, including:
a sensor assembly, including a plurality of sensors arranged in the building and configured to capture real-time data in the building;
a data processing module, connected to the plurality of sensors, and configured to receive the real-time data from the plurality of sensors, and process the real-time data to obtain processed data; and
a decision-making module, connected to the data processing module, and configured to receive the processed data, and determine a counter measure based on the processed data and a real-time decision model,
wherein the sensor assembly is further configured to capture response data in the building to the executed counter measure and feedback the response data to the decision-making module, and the decision-making module is further configured to train the real-time decision model based on the response data.

Optionally, in the intelligent control system, the intelligent control system further includes a data storage module configured to store the processed data and the corresponding response data as historical data, and the decision-making module is further configured to establish and train a predictive decision-making model based on the historical data, and determine a predictive measure based on the processed data and the predictive decision-making model.

Optionally, in the intelligent control system, the data storage module and/or the decision-making module is arranged in a cloud.

Optionally, in the intelligent control system, the sensor assembly includes one or more of a camera, a smoke detector, a thermometer, a hygrometer, a human body sensor, a light sensor, an air quality sensor, and a gun sound sensor, and the sensor assembly is configured to capture one or more of an image, smoke, temperature, humidity, light intensity, air quality, occupant flow density, occupant flow direction, special cases such as fire, gunshot, biochemical attack, and toxic gas leakage, and natural disasters including earthquake and flood in various areas in the building.

Optionally, in the intelligent control system, the processing performed by the data processing module on the real-time data includes one or more of noise reduction, feature extraction, image data recognition and conversion, or multi-type data fusion.

Optionally, in the intelligent control system, the counter measure and/or the predictive measure includes: sending an alarm, sending an evacuation path to a mobile phone of an occupant in the building and/or a display device in the building, controlling a direction to which an intelligent exit sign indicates, and/or broadcasting evacuation information.

Optionally, in the intelligent control system, the counter measure and/or the predictive measure further includes: adjusting operation of an elevator, adjusting a lighting system, adjusting a heating, ventilation, and air conditioning (HVAC) system, adjusting a ventilation system, adjusting a security system such as access control, and/or sending service/maintenance information to related personnel.

Optionally, in the intelligent control system, the decision-making module is further configured to determine an optimal counter measure based on the real-time decision model, the predictive decision-making model, and a confidence level for the predictive decision-making model.

Optionally, in the intelligent control system, the counter measure and/or the predictive measure is updated in real time based on the processed data.

According to another aspect, an intelligent control method for a building is provided, including:
capturing real-time data in the building by using a plurality of sensors arranged in the building;
processing the real-time data to obtain processed data;
determining a counter measure based on the processed data and a real-time decision model; and
capturing response data in the building to the executed counter measure and training the real-time decision model based on the response data.

The method may include providing and/or using a system as discussed above with reference to the first aspect or optional features thereof.

Optionally, the method further includes:
storing the processed data and the corresponding response data as historical data;
establishing and optimizing a predictive decision-making model based on the historical data; and
determining a predictive measure based on the processed data and the predictive decision-making model.

Optionally, the method further includes performing data storage and/or decision making in a cloud.

Optionally, the method includes capturing data by using one or more of the following sensors: a camera, a smoke detector, a thermometer, a hygrometer, a human body sensor, a light sensor, an air quality sensor, and a gun sound sensor, and the method further includes capturing one or more of an image, smoke, temperature, humidity, light intensity, air quality, occupant flow density, occupant flow direction, special cases such as fire, gunshot, biochemical attack, and toxic gas leakage, and natural disasters such as earthquake, flood and like in various areas in the building.

Optionally, the processing of the real-time data includes combination of one or more of noise reduction, feature extraction, image data recognition and conversion, or multi-type data fusion.

Optionally, the counter measure and/or the predictive measure includes: sending an alarm, sending an evacuation path to a mobile phone of an occupant in the building and/or a display device in the building, controlling a direction to which an intelligent exit sign indicates, and/or broadcasting evacuation information.

Optionally, the counter measure and/or the predictive measure further includes: adjusting operation of an elevator, adjusting a lighting system, adjusting a heating, ventilation, and air conditioning (HVAC) system, adjusting a ventilation system, adjusting a security system such as access control, and/or sending service/maintenance information to related personnel.

Optionally, the method further includes: determining an optimal counter measure based on the real-time decision model, the predictive decision-making model, and a confidence level for the predictive decision-making model.

Optionally, the method further includes: updating in real time the counter measure and/or the predictive measure based on the processed data.

The disclosure of the present invention will be more readily understood by reference to the accompanying drawings and the description below of certain embodiments, which is presented by way of example only. It should be readily understood by a person skilled in the art that the accompanying drawings are for the purposes of description only and are not intended to limit the protection scope of the present invention, which is defined by the claims. In addition, similar numbers are used to denote similar components in the drawings, in which:
FIG. 1 is a schematic structural diagram of an intelligent control system; and
FIG. 2 is a flowchart of an intelligent control method.

It will be readily understood that, in accordance with the technical solutions of the present invention, a person of ordinary skill in the art can propose various interchangeable structures and implementations without departing from the scope of the present invention, as defined by the claims. Therefore, the following detailed description of embodiments and the accompanying drawings are merely examples for describing the technical solutions of the present invention, should not be considered as the whole of the present invention and should not be considered as limiting the present invention.

The orientational terms that are or may be mentioned in this specification, such as up, down, left, right, front, back, front side, rear side, top, and bottom, are defined relative to the constructions shown in the accompanying drawings. They are relative concepts, and therefore may change with different positions and different use states. Therefore, these or other orientational terms should not be construed as limiting terms.

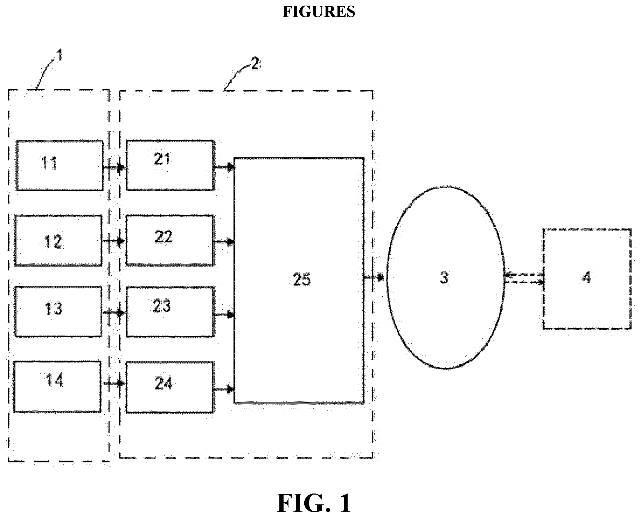

First, an intelligent control system is described with reference to FIG. 1. The intelligent control system is generally applied to a building, such as an office building, a shopping mall, or a subway. The intelligent control system can be advantageously applied to the evacuation of occupants in response to an emergency. In addition, the intelligent control system can also be used for adjusting device operation strategies in the building. The intelligent control system may include: a sensor assembly 1, a data processing module 2, and a decision-making module 3. The sensor assembly 1 may include a plurality of sensors 11, 12, 13, 14 arranged in the building. The plurality of sensors 11, 12, 13, 14 may include sensors of the same type. In other arrangements, the plurality of sensors 11, 12, 13, 14 may include sensors of different types. The plurality of sensors 11, 12, 13, 14 may include any combination of one or more of a camera, a smoke detector (smoke sensor), a thermometer, a hygrometer, a human body sensor, a light sensor, an air quality sensor, and a gun sound sensor, or any other suitable types of sensors and a combination thereof. In some embodiments, the plurality of sensors 11, 12, 13, 14 may capture any combination of one or more of an image, smoke, temperature, humidity, light intensity, air quality, occupant flow density, occupant flow direction, special cases including fire, earthquake, gunshot, fight, biochemical attack, and toxic gas leakage, and natural disasters including earthquake and flood in various areas in the building, or any other information that needs to be captured.

Information captured in real time by the sensor assembly 1 is transmitted to the data processing module 2 connected to the sensor assembly 1. It should be noted that the meaning of the term "connected" as used herein includes direct connection or indirect connection through one or more components, including electrical coupling or other signal connections, and also including wired connections or wireless connections. The data processing module may include secondary data processing components 21, 22, 23, 24 corresponding to each sensor 11, 12, 13, 14 in the sensor assembly. The secondary data processing components 21, 22, 23, 24 may process data of the corresponding sensors 11, 12, 13, 14, the processing including noise reduction, feature extraction, image data recognition and conversion, and so on. For example, the secondary data processing components 21, 22, 23, 24 may analyze and identify the acquired data, to remove noises or extract features from the data. In some embodiments, the secondary data processing components 21, 22, 23, 24 may further perform image data recognition and conversion, for example, recognizing and converting image information captured by the camera to produce special data. For example, fire alarm data is generated when a flame is detected, occupant density data is generated when occupants are detected in the image, occupant flow direction data is generated when a change in the occupant flow is detected in the image, and so on. The data processing module 2 further includes a primary data processing component 25, configured to aggregate and fuse data of the secondary data processing components 21, 22, 23, 24. The primary data processing component 25 may aggregate two or more types of data to obtain or estimate an event. For example, the primary data processing component 25 may estimate and confirm a fire event based on a flame in image data, a smoke signal from a smoke detector, and a temperature signal from a temperature sensor in the same area. Alternatively or additionally, the primary data processing component 25 may estimate the location of the fire based on the occupant flow direction data and smoke detector data. The data processing module 2 can present the status in the building in real time by aggregating data. For example, the data processing module 2 may be connected to a building information modeling (BIM) model to dynamically present the status in the building in a more intuitive manner. It should be noted that, although the data processing module 2 includes the secondary data processing components 21, 22, 23, 24 and the primary data processing component 25 in the arrangements shown, in alternative arrangements, the data processing module 2 may include only the primary data processing component 25 capable of processing data of the sensors, and the various data is directly analyzed and processed in the primary data processing component 25.

The data processing module 2 is further connected to the decision-making module 3. The decision-making module 3 is configured to receive the real-time data processed by the data processing module 2 and determine a counter measure based on the processed data and a real-time decision model. The real-time decision model may be a model preset in the decision-making module 3. The real-time decision model may be built by a developer based on past data or experience. The counter measure may include an emergency counter measure and a daily management measure. The emergency counter measure includes an urgent response to an emergency. For example, the real-time decision model may include a simple counter measure based on a single condition, for example, sending corresponding alarm information in the case of an event such as fire, gunshot, earthquake or other events, sending an evacuation path to a mobile phone of an occupant in the building and/or a display device in the building, controlling a direction to which an intelligent exit sign indicates, and/or broadcasting evacuation information. Evacuation paths may be intelligently allocated according to the locations of occupants, so that each occupant can obtain an optimal escape route according to the obtained evacuation path displayed on a mobile phone and leave the building quickly, thus avoiding congestion and disorder as much as possible. The evacuation path may be intelligently calculated in real time according to the actual location of the disaster on-site, the actual locations of occupants, and a map of the building and the like, displayed in a BIM model, and sent to a mobile terminal such as a mobile phone or a display in the building. For another example, the intelligent exit sign is a sign capable of changing an indication direction upon reception of a control instruction. When an event occurs, an optimal indication direction may be allocated to the intelligent exit sign according to the occupant flow status and the location of the event, providing a guidance for evacuation of the occupants. For example, when a gunshot or fire event occurs, the occupants can be guided to move away from the location of the gunshot or fire. The counter measure may be updated in real time based on a change in the field situation, for example, based on a fire spreading direction or a shooter movement path, and the like. The change in the field situation may also be captured by using the sensor assembly. Therefore, the counter measure and/or the predictive measure may be updated in real time based on the processed data. In alternative arrangements, the real-time decision model further includes a multi-condition counter measure based on a plurality of sensors of different types. For example, a fire counter measure is executed when the camera captures a flame and a smoke detector in the same area detects smoke. In this way, the accuracy of the counter measure can be increased, avoiding a false alarm caused by use of a single sensor. The decision-making module 3 may also execute a daily management measure, for example, control for optimizing the operation of devices in the building, e.g., adjusting operation of an escalator and/or an elevator, adjusting a lighting system, adjusting a heating, ventilation, and air conditioning (HVAC) system, adjusting a ventilation system, adjusting a security system including access control, and/or sending service/maintenance information to related personnel. For example, the decision-making module 3 adjusts the arrangement of elevators or the running direction of escalators when there is a large number of occupants, or dynamically adjusts the lighting system, the HVAC system, and the ventilation system according to the occupant flow density, and so on. More specifically, the decision-making module 3 may determine the number of elevators to be used according to the number of occupants in the building within a certain period of time. For another example, the decision-making module 3 sends maintenance information to maintenance personnel when temperature inside the building cannot reach a preset temperature. Optimizing the control of the devices in the building can save energy. In some embodiments, a manual confirmation step may be added before a counter measure of, for example, sending an evacuation path and an alarm, is taken.

In the arrangement of this example, the sensor assembly further captures response data 4 in the building to executed counter measure, including responses of occupants and other responses, and train (optimize) the real-time decision model based on the response data 4. The decision-making module 3 has a self-learning function, and continuously trains and improves the real-time decision model based on the response data 4, thus improving the accuracy of subsequent decisions. For example, when an alarm is sent, general escape paths of occupants are obtained; when evacuation paths are sent, it may be detected whether movement directions of occupants are consistent with the evacuation paths sent to the occupants; and so on. For another example, the response data also includes energy consumption after the building control strategy is changed, comfort levels of users, and so on.

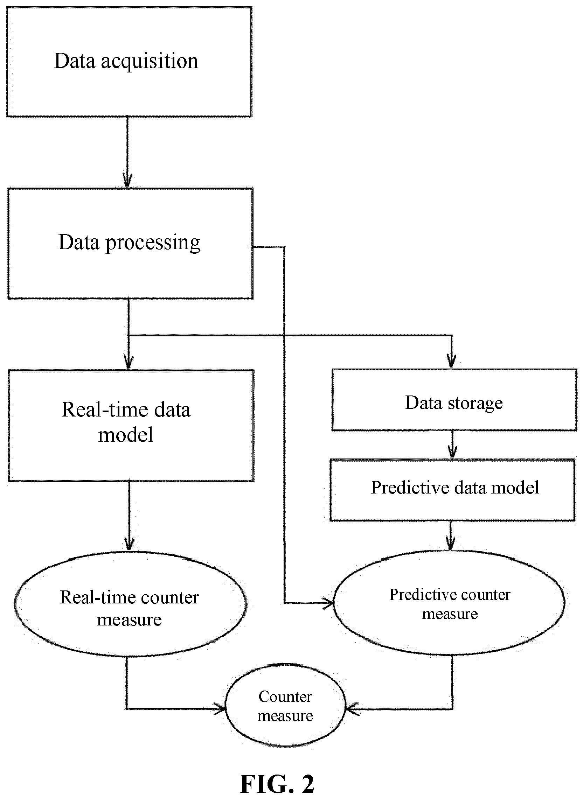

Referring to FIG. 2, besides real-time decision making, the processed data and optionally the corresponding response data may be stored, for example, in a local or cloud database, as historical data. The decision-making module 3 may further establish and/or train a predictive decision-making model based on the historical data, and determine a predictive measure based on the processed data and the predictive decision-making model. The predictive measure may include: after the real-time data is obtained, finding a fire sign to avoid occurrence of a fire, or evacuating occupants in advance, for example, predicting a potential crisis, event, and trend, like a location of a fire, a fire spreading direction, and a shooter and movement route thereof, and executing the predictive measure based on the prediction, for example, sending an alarm, calling security personnel, controlling a security system in the building, like closing/opening an automatic door; for another example, predicting weather according to temperature data and adjusting an operation strategy of an air conditioning system, predicting weather quality according to air quality and adjusting an operation strategy of a ventilation system, and so on. In addition, the predictive decision-making model may also be used for predicting other behavior, for example, predicting responses of occupants, for example, predicting a spread path of fire or an escape path of a shooter at the time of fire or gunshot. A final counter measure may be determined based on the real-time decision model and the predictive decision-making model. For example, an optimal decision is made by fusing results of the real-time decision model and the predictive decision-making model. In some embodiments, the real-time decision model and the predictive decision-making model may be fused by using any suitable mathematical method, for example, influencing the counter measure of the real-time decision model based on a weighted average with predicted confidence levels. In some embodiments, the influence of the predictive decision-making model on the final decision is increased or reduced by adjusting a confidence coefficient. Weights of the real-time decision model and the predictive decision-making model in the final decision may be trained and adjusted based on the historical data, so as to optimize the final decision. Manual intervention may be introduced based on a result deduced from the predictive decision-making model. For example, when a fire occurs in the building, the decision step may be manually intervened. To determine a counter measure, first, results of various decisions are deduced by using the predictive decision-making model, and an optimal counter measure is selected based on the prediction results. The historical data may also be used to train the predictive decision-making model.

The data processing module, the decision-making module and the data storage module may both be disposed locally to increase the response speed. Optionally, the stored data may be updated to a host database, the real-time decision model and the predictive decision-making model are trained in the host data base, and the local predictive decision-making model and real-time decision model are updated periodically. The data processing module, the decision-making module and the data storage module may all be disposed in a cloud, so that historical data of more buildings can be obtained to train the real-time decision model and the predictive decision-making model.

An intelligent control method for a building is provided, including: capturing real-time data in the building by using a plurality of sensors arranged in the building; processing the real-time data to obtain processed data; determining a counter measure based on the processed data and a real-time decision model; and capturing response data in the building to the executed the counter measure and training the real-time decision model based on the response data. Optionally, the method further includes: storing the processed data and the corresponding response data as historical data; establishing a predictive decision-making model based on the historical data and optimizing the predictive decision-making model based on a training model; and determining a predictive measure based on the processed data and the predictive decision-making model.

It should be noted that the measures described herein can all be used as the counter measures determined based on the real-time decision model and the predictive measure determined based on the predictive decision-making model.

The specific embodiments described above are merely for the purpose of describing the principles of the present invention more clearly, in which the components are clearly shown or described to make the principles of the present invention more comprehensible. A person skilled in the art may easily make various modifications or variations to the present invention without departing from the scope of the present invention, as defined by the claims. Therefore, it should be understood that such modifications or variations are intended to be included within the protection scope of the present invention, which is defined by the following claims.

## Claims

1. An intelligent control system for a building, the intelligent control system comprising:
a sensor assembly, comprising a plurality of sensors arranged in the building and configured to capture real-time data in the building;
a data processing module, connected to the plurality of sensors, and configured to receive the real-time data from the plurality of sensors, and process the real-time data to obtain processed data; and
a decision-making module, connected to the data processing module, and configured to receive the processed data, and determine a counter measure based on the processed data and a real-time decision model,
wherein the sensor assembly is further configured to capture response data in the building to the executed counter measure and feedback the response data to the decision-making module, and the decision-making module is further configured to train the real-time decision model based on the response data.

2. The intelligent control system according to claim 1, wherein the intelligent control system further comprises a data storage module configured to store the processed data and the corresponding response data as historical data, and the decision-making module is further configured to establish and optimize a predictive decision-making model based on the historical data, and determine a predictive measure based on the processed data and the predictive decision-making model.

3. The intelligent control system according to claim 2, wherein the data storage module and/or the decision-making module is arranged in a cloud.

4. The intelligent control system according to claim 1, 2 or 3, wherein the sensor assembly comprises one or more of a camera, a smoke detector, a thermometer, a hygrometer, a human body sensor, a light sensor, an air quality sensor, and a gun sound sensor, and the sensor assembly is configured to capture one or more of an image, smoke, temperature, humidity, light intensity, air quality, occupant flow density, occupant flow direction, special cases such as fire, gunshot, biochemical attack, and toxic gas leakage, and natural disasters such as earthquake and flood in various areas in the building.

5. The intelligent control system according to any preceding claim, wherein the processing performed by the data processing module on the real-time data comprises one or more of noise reduction, feature extraction, image data recognition and conversion, or multi-type data fusion.

6. The intelligent control system according to claim 2, wherein the counter measure and/or the predictive measure comprises: sending an alarm, sending an evacuation path to a mobile phone of an occupant in the building and/or a display device in the building, controlling a direction to which an intelligent exit sign indicates, and/or broadcasting evacuation information.

7. The intelligent control system according to claim 6, wherein the counter measure and/or the predictive measure further comprises: adjusting operation of an elevator, adjusting a lighting system, adjusting a heating, ventilation, and air conditioning (HVAC) system, adjusting a ventilation system, adjusting a security system such as access control, and/or sending service/maintenance information to related personnel.

8. The intelligent control system according to claim 2, 6 or 7, wherein the decision-making module is further configured to determine an optimal counter measure based on the real-time decision model, the predictive decision-making model, and a confidence level for the predictive decision-making model.

9. The intelligent control system according to claim 2, 6, 7 or 8, wherein the counter measure and/or the predictive measure is updated in real time based on the processed data.

10. An intelligent control method for a building, comprising:
capturing real-time data in the building by using a plurality of sensors arranged in the building;
processing the real-time data to obtain processed data;
determining a counter measure based on the processed data and a real-time decision model; and
capturing response data in the building to the executed counter measure and training the real-time decision model based on the response data.

11. The intelligent control method according to claim 10, wherein the method further comprises:
storing the processed data and the corresponding response data as historical data;
establishing and optimize a predictive decision-making model based on the historical data; and
determining a predictive measure based on the processed data and the predictive decision-making model;
optionally wherein the method further comprises performing data storage and/or decision making in a cloud.

12. The intelligent control method according to claim 10 or 11, wherein the method comprises capturing data by using one or more of the following sensors: a camera, a smoke detector, a thermometer, a hygrometer, a human body sensor, a light sensor, an air quality sensor, and a gun sound sensor, and the method further comprises capturing one or more of an image, smoke, temperature, humidity, light intensity, air quality, occupant flow density, occupant flow direction, special cases such as fire, gunshot, biochemical attack, and toxic gas leakage, and natural disasters such as earthquake and flood in various areas in the building.

13. The intelligent control method according to claim 10, 11 or 12, wherein the processing of the real-time data comprises combination of one or more of noise reduction, feature extraction, image data recognition and conversion, or multi-type data fusion.

14. The intelligent control method according to claim 11, wherein the method further comprises: determining an optimal counter measure based on the real-time decision model, the predictive decision-making model, and a confidence level for the predictive decision-making model.

15. The intelligent control method according to claim 11 or 14, wherein the method further comprises: updating in real time the counter measure and/or the predictive measure based on the processed data.
